(19) **Europäisches Patentamt**

**European Patent Office**

**Office européen des brevets**

(11) **EP 0 783 983 B1**

(12) **EUROPEAN PATENT SPECIFICATION**

(45) Date of publication and mention
of the grant of the patent:
**11.07.2001 Bulletin 2001/28**

(51) Int Cl.$^7$: **B60C 23/06**

(21) Application number: **97300109.2**

(22) Date of filing: **09.01.1997**

(54) **Method and device for identifying kind of tyre**

Verfahren und Vorrichtung zur Identifikation der Art des Reifens

Procédé et dispositif pour identifier le type d'un pneumatique

(84) Designated Contracting States:
**DE FR GB**

(30) Priority: **12.01.1996 JP 365896**

(43) Date of publication of application:
**16.07.1997 Bulletin 1997/29**

(73) Proprietors:
- **SUMITOMO RUBBER INDUSTRIES LIMITED
  Kobe-shi, Hyogo-ken (JP)**
- **SUMITOMO ELECTRIC INDUSTRIES, LTD
  Osaka-shi, Osaka-fu 541 (JP)**

(72) Inventor: **Yanase, Minao
Kobe-shi, Hyogo-ken (JP)**

(74) Representative: **Stewart, Charles Geoffrey
Dunlop Tyres Ltd
Fort Dunlop, Erdington,
Birmingham B24 9QT (GB)**

(56) References cited:
**EP-A- 0 636 503        DE-A- 4 410 941**

**Description**

The present invention relates to a method and device for identifying the kind of tyre fitted on a vehicle. More particularly, it relates to a method and device for identifying kinds of tyres having differences in pattern stiffness which has a large influence on the cornering performance and is especially effective for identifying summer and winter tyres.

In recent years, there have appeared many devices designed to improve performance and safety of vehicles based on information on tyre rotational speed. For example, there are ABS (anti-lock braking system), TCS (traction control system), NAVI (navigation system), pneumatic pressure loss alarm system, etc. These are designed to determine the behaviour of the vehicle from information on tyre rotational speed and thence to control the vehicle or to provide information so as to allow the driver to perform more comfortable and safer driving.

On the other hand, tyres have grooves in the bead to provide for water discharge. Provision of circumferential and lateral grooves form rubber blocks surrounded by the grooves. Large blocks are less apt to show shearing deformation in the forward and backward directions as well as sideways, as they have large stiffness. Generally tyres having tread patterns comprising large blocks are said to be tyres of large pattern stiffness.

The pattern stiffness of a tyre has a large influence on the cornering power and cornering force. Tyres having large pattern stiffness have large cornering power. Accordingly, in order to determine the behaviour of the vehicle based on the information on rotation of the tyre, it is necessary to understand and assess the performance of the tyre.

However, conventionally, vehicle control devices as described above are in many cases tuned to match the tyres fitted to the new vehicle. Accordingly, when tyres have been changed to those of greatly different specifications, determination of the vehicle behaviour from wheel speeds becomes different from the real state, so that there is a problem as the accuracy of the information provided to the driver cannot be relied on.

In view of the above problem, it is desirable to find a method and device by which, according to the type of tyres fitted, the tuning can be automatically carried out to meet the newly fitted tyre.

Further, in order to provide such a device at a low cost, it is desirable to do this using the means for measuring the tyre rotation information such as an angular velocity sensor originally furnished on the vehicle.

In DE 44 109 41 A1 it has been proposed during initialisation of the system to use a compensation coefficient which is checked to see if it has the proper values and only if correct is it used. If it is found incorrect then the system is not set but re-initialisation is carried out (see steps S717-S720). However, the system determines only that the compensation coefficient is incorrect; thereby, the system judges whether a spare-wheel is mounted on the vehicle by comparing, with a threshold value, the relation between the vehicle speed and the absolute value of the difference between the sums of the left and right wheel speeds.

The present invention has the object to provide a method and device for identifying the kind or type of tyre from the rotation information of the tyre.

Further, it is an ultimate object to improve the precision of vehicle control devices such as ABS by self-containing or connecting the method and device of the present invention with a vehicle control device and by then re-tuning the vehicle control device to match the tyres.

The present invention has been made by the inventor realising that the difference of pattern stiffness has a close relation to the cornering performance which is considered to give the largest influence on the behaviour of the vehicle. Above all, the effect is remarkable when a change is made from summer tyres to winter tyres (or vice versa). It is because, in general, tyres for summer use have large stiffness, and tyres for winter use have small stiffness. Further, due to the recent extension of abrasion life of tyres by adoption of the radial carcass and the like, the times for replacement of tyres have decreased. However, changing tyres for summer use to those for winter use has become customary in many regions, so that a method and device for identifying the kind fitted is greatly in demand.

Accordingly the object of the present invention is met by the subject-matter of claims 1 and 7 and further advantageous embodiments thereof are defined in the dependent claims.

Further aspects of the present invention will be apparent from the following description, by way of example only, of embodiments in which:

Figure 1 is a view showing the relation between the slip ratio and the friction coefficient of a tyre for summer use;
Figure 2 is a view showing the relation between the slip ratio and the friction coefficient of a tyre for winter use;
Figure 3 is a graph showing a relationship between front-rear wheel ratio and speed;
Figure 4 is a data table of acceleration (average speed is optional) and front-rear wheel ratio of the tyre for summer use;
Figure 5 is a data table of acceleration (average speed is optional) and front-rear wheel ratio of the tyre for winter use;
Figure 6 is a regression line of the function of acceleration (average speed is optional) and front-rear wheel ratio prepared on basis of Figure 4 and Figure 5;
Figure 7 is a graph showing the judgement value range of the tyre for summer use determined on the basis of Figure 3;
Figure 8 is a graph showing the threshold value set on the basis of Figure 3;
Figure 9 is a graph showing the judgement value range of the tyre for summer use determined on the basis of Figure 6; and
Figure 10 is a graph showing the threshold value set on the basis of Figure 6.

The tyre identification method and device of the present invention are based on recognition of the fact that different types of tyre have different slip ratios for the driving wheels on a vehicle. Using the means for measuring the rotational speed of wheels already provided on the vehicle for a control device such as ABS (angular speed sensors which generate pulses by using an electromagnetic pickup to measure rotational speed from the number of pulses, or alternatively to measure the rotational speed from the voltage generated by a device such as a dynamo). The slip ratio of the driving wheel is calculated as the ratio of the front wheel rotational speed to the rear wheel rotational speed (hereinafter referred to as front-rear wheel ratio). Then, by comparing the data which is previously known (known data) with the data taken from the tyre which is presently fitted (measured data), it is possible to identify the type of tyre, including for example to decided whether the fitted tyre is of the same kind as that fitted to the vehicle at the time of purchase of the new vehicle or not.

Heretofore, it has been considered difficult to identify the kind of tyre by using the rotation information of the tyre, but now using this invention it is possible. Also the ultimate use of this tyre identifying method allows the type of tyre fitted to the vehicle to be communicated to control devices such as ABS which is then able to be tuned to meet the actual performance of the tyre fitted and thus to improve the precision of these devices.

Meanwhile, it is known that the cornering performance is dependent on the pattern lateral stiffness of the tyre. Also, a tyre having largely different pattern lateral stiffness is considered to have large differences in pattern front-rear stiffness.

Accordingly, in the present invention, the inventor has avoided utilising the pattern lateral stiffness and instead used the slip ratio which is closely related to the pattern front-rear or longitudinal stiffness. This is based on the concept that tyres having different pattern front-rear stiffness can be identified from the slip ratio, then tuning can be done in conformity with it, thereby making is possible to control more finely and accurately the behaviour of the vehicle in cornering related to the pattern lateral stiffness.

The following equations show the general calculation method for the slip ratio.

<at driving>        (Vb - Vr)/Vb X 100 (%)

<at braking>        (Vb - Vr)/Vr X 100 (%)

where, Vr is the road surface (or vehicle) speed, and Vb is the rotational speed of the tyre.

When a driving force is applied to a driven wheel, slipping occurs at the tread. Accordingly, by comparing the rotational speed of a driven wheel with the rotational speed of a non-driven wheel, the extent of slipping can be measured. In fact the rotation speed of the non-driven wheel is smaller than that of the driven wheel by the amount of slip. In the present invention, it is contrived so as not to obtain the slip ratio but to obtain the value of the rotation speed ratio of the driven wheel to the non-driven wheel by substitution of the front-rear wheel ratio, thereby making is possible to identify simply the kind of tyre.

The value of the front-rear wheel ratio is larger when a largerdriving force is exerted, and so can be more easily taken as standards for measurement and identification. The time when it is necessary to exert driving force to the driving wheel is A) while running at a constant speed (while running at a constant speed coping with running distance (friction force), pneumatic resistance and the like), B) while running in acceleration, and C) while running up a rise or slope.

During running up a slope, a larger driving force is exerted than when running on a flat road, so that it seems preferably to take the front-rear wheel ratio at that time as a basis for identification. However, due to the enlargement of the value of the front-rear wheel ratio, there is a danger to induce a misrecognition that the tyre has been replace by one having a low tread stiffness. For this reason, it is difficult to judge only by the information on rotation speed of wheel that the vehicle is running up a slope. Accordingly, in the present invention, it is preferable to exclude data during running up a slope and to use only data for constant speed running and acceleration when running on a flat road surface as the standards for identification.

As a method for excluding data for running up a slope, a method of sampling is desirable. It is preferable, for example, to take sampling data every one minute over 1 to 2 hours, or to take sampling data once an hour for at least 24 times (one day at the shortest) and exclude abnormal data, because in general it is hardly conceivable from the road situation to continue up a slope for 1 to 2 hours.

The driving force during acceleration includes its two factors of driving force necessary for constant speed running and driving force necessary for acceleration. Although it is not possible to separate these two for comparison, it is possible to compare data at the same acceleration speed with the average speed taken.

Further, in the present invention, the known data and the measured data are compared by a function. Example of functions are (1) function of speed and front-rear wheel ratio, and (2) function of acceleration and front-rear wheel ratio (average speed is optional).

(2) is intended to compare the known data and the measured data regardless of the average speed. For example, the front-rear wheel ratio of the rotation speed is found in the range of 0.05 to 0.2G acceleration for a tyre for summer use adjusted to normal pneumatic pressure, at intervals of, for example, 0.05G.

Then, by obtaining certain acceleration (average acceleration in sampling) up to about 0.05 - 0.2G of acceleration, the known front-rear wheel ratio corresponding thereto is compared. If the measured acceleration does not come up to the table of 0.05G steps, the amount might be obtained by interpolation.

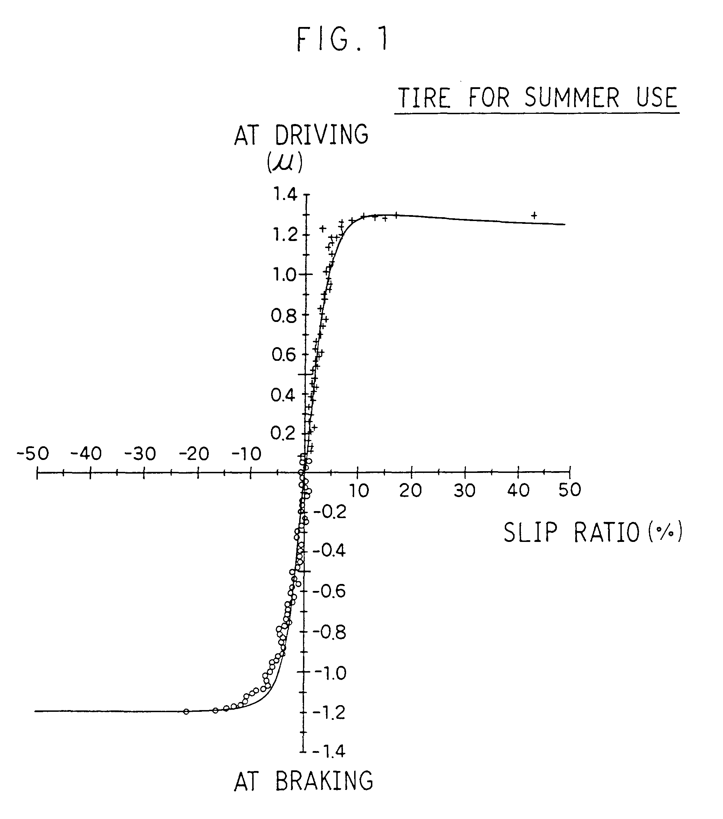

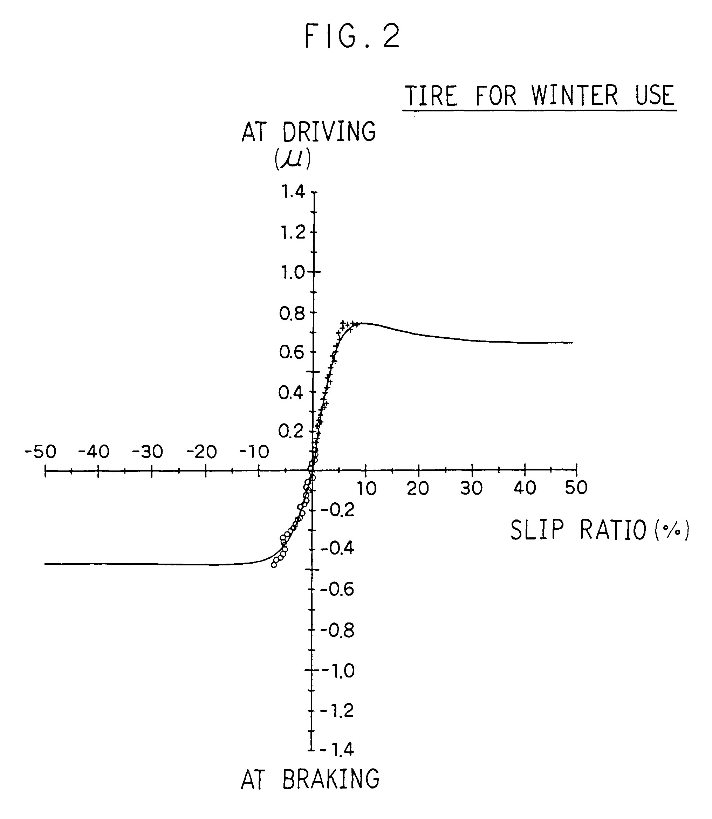

Figure 1 and Figure 2 show the slip ratios of the driven wheels for the summer tyres (ref. Fig. 1) and for the winter tyres (ref. Fig. 2) when running on a flat road surface at a constant speed (10 km/h). Also, Table 2 shows the data for experiments conducted in preparing Figure 1 and Figure 2.

Table 1

| Maker Name | DUNLOP |
|---|---|
| Tire size | 195/60R15 |
| Rim size | 6 |
| Speed | 10 km/h |
| Inflation pressure | Tyre for summer use 2.20 kg/cm$^2$ <br> Tyre for winter use 2.00 kg/cm$^2$ |
| Load | Tyre for summer use 300 kg <br> Tyre for winter use 350 kg |
| Slip angle | 0° |

As shown in Figure 1 and Figure 2, between the tyre for summer use and the tyre for winter use, the influences to sustain from the road surface differ to a great extent. Also, between the tyre for summer use and the tyre for winter use, μ-S curves differ significantly. Especially for large driving force conditions, i.e. in high speed running conditions when there is large pneumatic resistance, the difference is large and therefore comparison is easy. In this way, it can be seen that identification between the summer tyres and the winter tyres can be easily done based on (1) function of speed and front-rear wheel ratio.

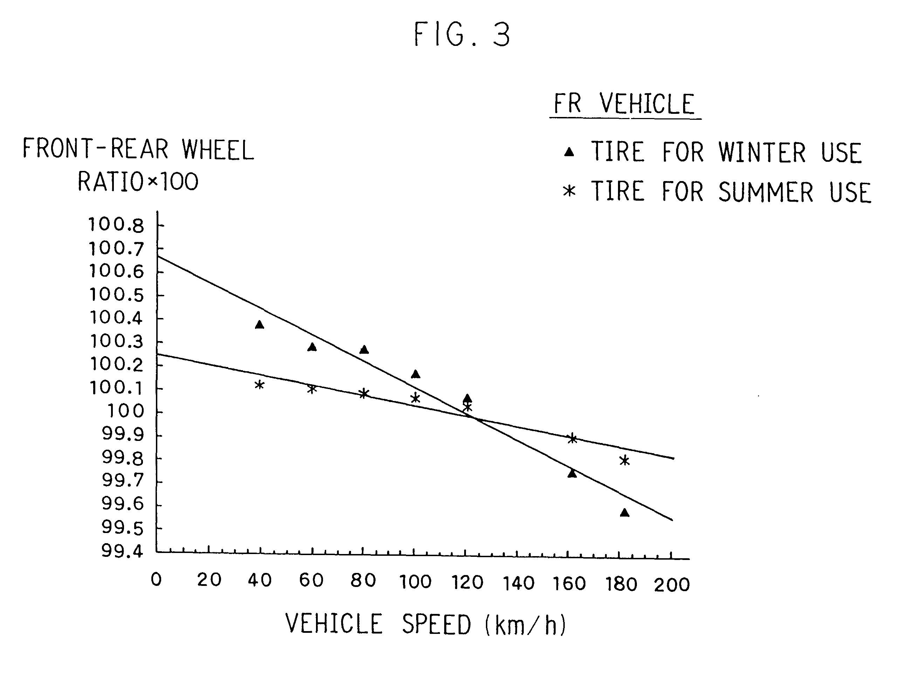

Figure 3 is a graphical representation of (1) function of speed and front-rear wheel ratio based on the data of the summer tyre and the winter tyre.

Figure 3 shows the front-rear wheel ratio obtained for the summer tyre and the winter tyre previously adjusted to normal pneumatic pressure in the range of speed of 40 km/h - 180 km/h, for example, every 20 km/h. At this time, to obtain the front-rear wheel ratio from the average of the rotational speeds of the two rear wheels is preferable from the point of lessening the influence caused by turning. The data in Figure 3 is taken for a FR vehicle.

In Figure 3, as the speed increases, the front-rear wheel ratio is seen to decrease (it increases for a FF vehicle) in a secondary function manner. Between the summer tyres and winter tyres, the decrease rates thereof show a great difference.

In Figure 3, a regression line by a primary function is drawn for simplification, but it is preferably to make regression by a secondary function. However, even from this graph, it can be seen that the front-rear wheel ratio is more severe for the winter tyre having small stiffness than for the summer tyre.

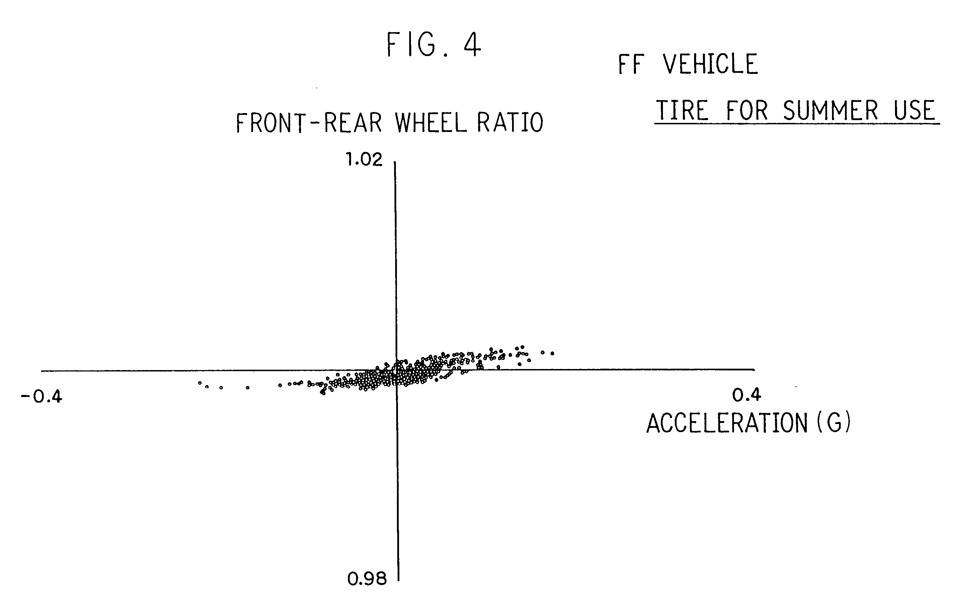

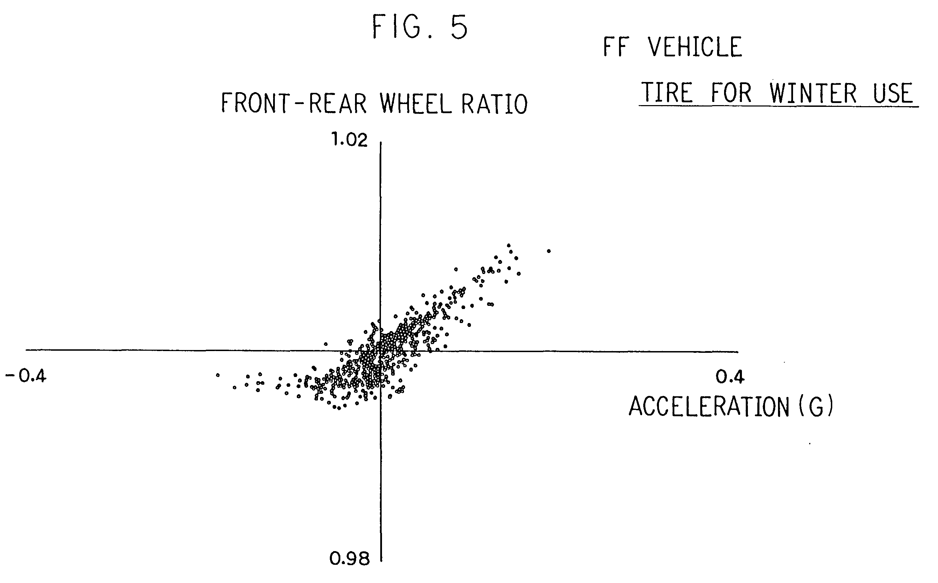

Also, Figure 4 and Figure 5 show plotting of the measured values for the case of linear running (average speed is optional) on a flat road surface for the purpose of preparing (2) acceleration to front-rear wheel ratio function. Figure 4 shows the function for a summer tyre, and Figure 5 that for winter use (FF vehicles respectively).

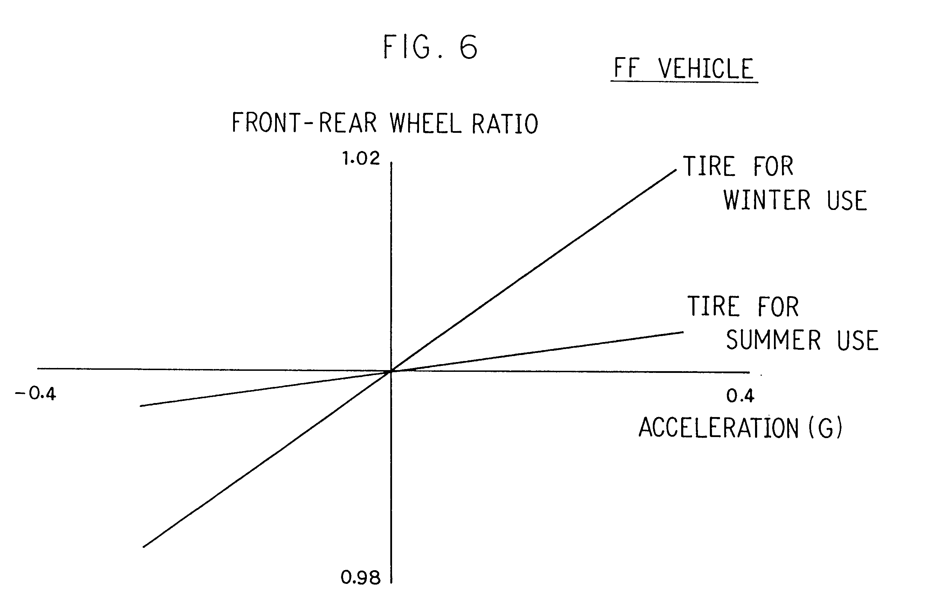

As shown in Figure 4 and Figure 5, the increase rates of the front-rear wheel ratio show great differences between the summer tyre and the winter tyre, and they can be regressed to, for example primary functions. Figure 6 shows the regression lines obtained from Figure 4 and Figure 5 and summarised into a single form.

The methods of making comparison by using a function include, besides the method of determining the judgement value range to be described later and the method of determining a threshold value between the two functions of summer tyre and winter tyre, a method of preparing a regressive function from the data during running and comparing the coefficients of the prepared regressive functions with the coefficient of the regressive function prepared from the known data.

The facility which is most desired to be known by a vehicle control device using the functions as described above is whether the present tuning factor is correct for the fitted tyres or not.

In view of the above, it is preferably to make it possible to identify, for example, whether 1) the tyre of the same kind as that initially fitted to the vehicle is fitted at present or not; or 2) which kind of the two types of tyres typically different in stiffness (as represented by summer tyre and winter tyre) is fitted at the time. However, besides the above, it is also possible to provide a method of identifying more than three kinds of tyres by preparing to input the known data of not less than three kinds and finding which is the nearest, or a method of identifying whether the specified tyre is fitted at the time or not by preparing to input one specified data.

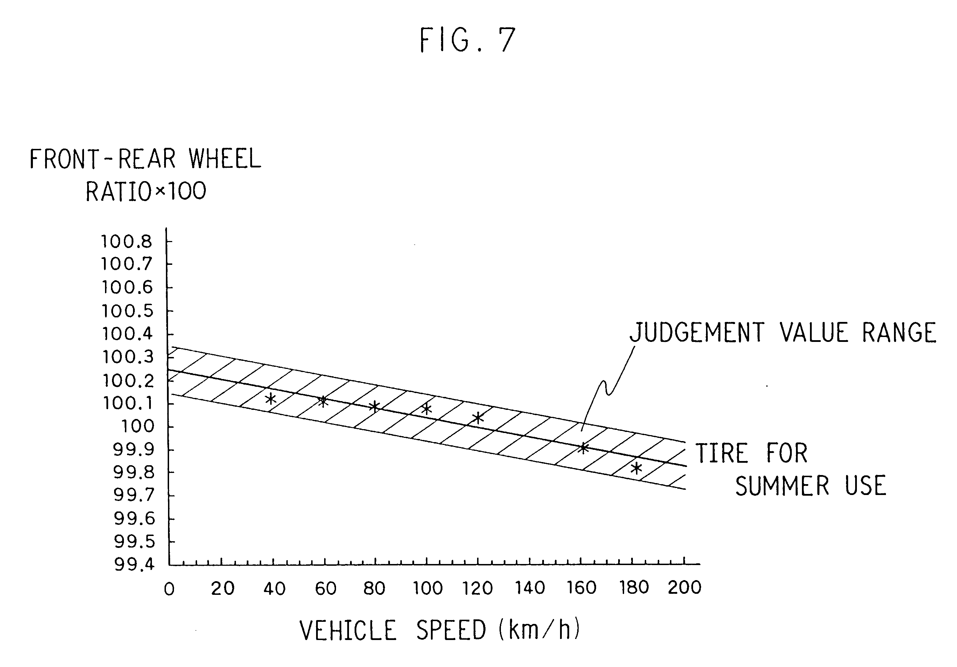

Next, based on Figures 7 to 10, the method and device for identifying matters 1) and 2) stated above will be explained. In general, the vehicle is fitted with a summer tyre as a standard, and it is considered most effective to detect the replacement of the tyre from the summer use one to the winter use one. Therefore, explanation is given on assumption of such a case.

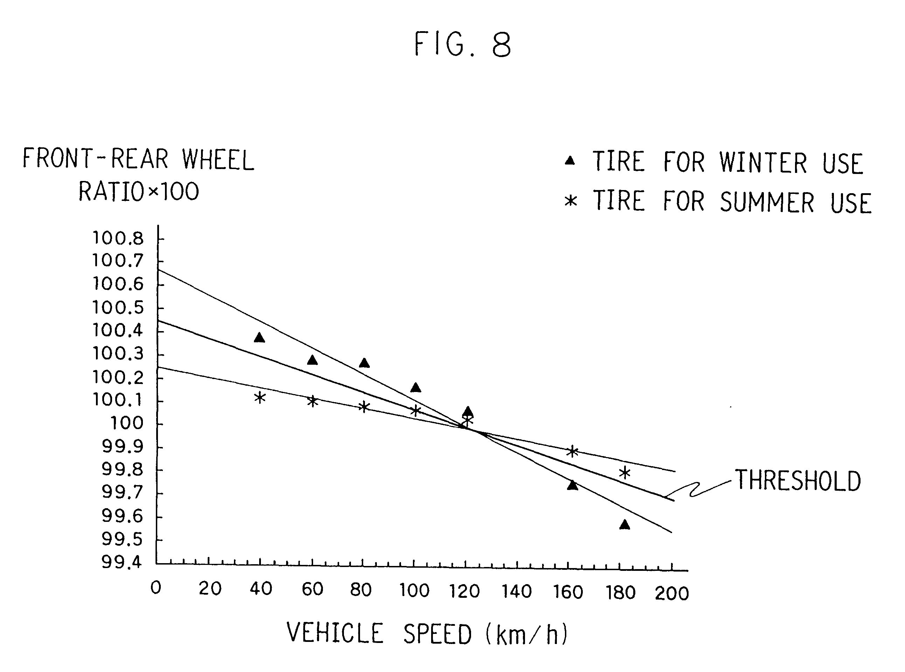

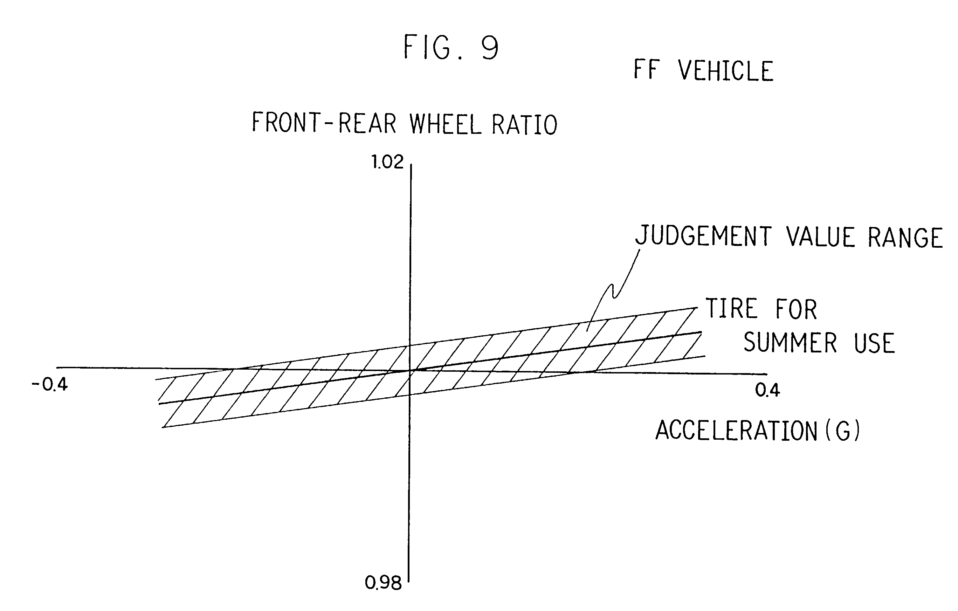

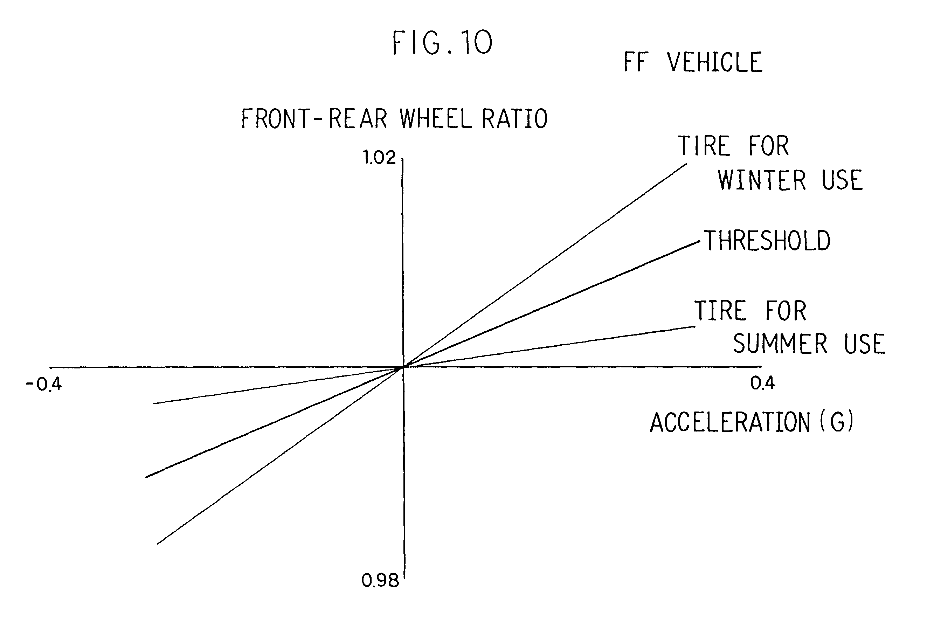

Figure 7 and Figure 9 show the case of determining the judgement value range so as to make it possible to carry out identification of the above (1), and Figures 8 and 10 show that the threshold values are set so as to make it possible to carry out the identification of (2) above.

Figure 7 is based on the graph of the summer tyre shown in Figure 3. The judgement value range is preferably determined appropriately depending on the scattering of the data, or preferably determined by comparing with the data of the winter tyre.

Identification is performed during running according to the following steps:

(a) the rotational speed of four tyres fitted to the wheels of the vehicle is measured;
(b) the front-rear wheel ratio is calculated on the basis of the measured data; and
(c) identification is made as to whether the calculated value of front-rear wheel ratio lies within the judgement value range shown in the graph of Figure 7.

If the value is within the judgement value range, it follows that the tyre has not been replaced, but if it is not within the judgement value range, then it is identified that the tyre was changed to the one other than that for summer use (i.e. the tyre for winter use).

Though the judgement value range of Figure 7 is set at 0 - 200 km/h, when compared with the value of the tyre for winter use, the difference tends to appear remarkably if the value falls within the range of 150 - 180 km/h. Therefore, it is preferable to make comparison in this range (preferably in the range of 150 - 160 km/h.).

As a device for carrying out such a process, the tyre identifying device of the present invention comprises the features as defined in claim 7, e.g. rotational speed measuring means for measuring the rotation speed of all four tyres fitted to wheels of a vehicle; and calculating and identifying means for calculating the ratio of the front wheel rotation speed to the rear wheel rotation speed from the measured value by the above rotational speed measuring devices and identifying the type of tyre fitted from the calculated front-rear wheel ratio value. The calculating and identifying means is so constituted as to be capable of identifying as to whether the calculated front-rear wheel ratio value is within the above identification value range of Figure 7.

On the other hand, it is preferable for the ECU of the vehicle control device such as the ABS ECU to hold both tuning factors for the summer tyre and the winter tyre. In this vehicle control device it is then possible to carry out the tyre identifying method of the present invention and then in the vehicle control device connected with the tyre identifying device of the present invention, as described above, once it is judged that other than summer tyre is fitted, the mode is automatically changed to the tuning factor of the tyre for summer use. On the other hand, manual changeover is feasible so that the tyre sensor and ABS remain separate.

In the case where the ECU of the vehicle control device is allowed to retain only the tuning factor for the tyre for summer use, when it is judged that the fitted tyre is not that for summer use, means is taken to notify the driver to that effect to avoid dangers, such as a warning light or noise.

Next, explanation is given on the method and device for carrying out identification as to which kind is fitted of the two types having typically different stiffness in the above (2) (represented by the tyre for summer use and the tyre for winter use), based on Figure 8.

Figure 8 shows the threshold value set on the basis of the graph of Figure 3. The threshold value is provided just at the intermediate part between the two values.

Here, Figure 8 shows regression to the primary function, but regression to the secondary function is also acceptable. In these cases, it is desirable to take the value lying between the two regressive curves (intermediate point is preferable) as the threshold value.

The identification is carried out during running by the steps as defined in claim 1, e.g. the rotational speed of four tyres fitted to wheels of a vehicle is measured; the front-rear wheel ratio is calculated on the basis of the measured date; and identification is made as to whether the calculated value of the front-rear wheel ratio lies within the judgement value range shown in the graph of Figure 8.

For example, when the front-rear wheel ratio value calculated at not more than about 120 km/h is higher than the threshold value, it is judged to be the tyre for winter use, while when it is lower than the threshold value, it is judged to be the tyre for summer use. When the front-rear wheel ratio value is considered about 120 km/h, the relation is vice versa.

As shown in Figure 8, it might be so arranged as not to carry out the identification in the whole range of 0 - 200 km/h but to calculate the average front-rear wheel ratio, for example, in the range of 150 - 160 km/h, and to make the comparison between the average value and the threshold value.

Further, the front-rear wheel ratio can be calculated at all running speeds to prepare a function of speed and front-rear wheel ratio (preferably secondary function) from the data during running, so as to make comparison between the coefficient of the function and the coefficient of the function prepared from the tyre for summer use or the tyre for winter use.

The comparison of calculations might be carried out at all times, but it is preferable to carry out extraction by sampling as described above, so as to reduce the effect of running up slopes. Further, in order to exclude the effect caused by turning, it can be arranged to monitor the steering angle, lateral acceleration, etc. and then when turning to exclude the data.

The calculating and identifying means of the device is so constituted as to be capable of identifying as to which of the upper or lower side of the threshold value of Figure 8 the calculated front-rear wheel ratio value lies.

It is desirable that the tuning factors of both the summer tyre and the winter tyre are held by the ECU, so that, depending on the identified results, automatic switch-over to the tuning for summer tyre or to the tuning for winter tyre can be made. Manual operation is also possible so the two systems, e.g. tyre detection and ABS, are separate.

Figure 9 shows determination of the judgement value range based on the graph for summer tyre out of the graph of the function of acceleration and front-rear wheel ratio function. Explanation is given on the method of identifying as to whether the fitted tyre is for summer use or not. The judgement value range is determined in the same manner as in Figure 7.

The identification is carried out during running by the following steps: the rotational speed of the four tyres fitted to the wheels of a vehicle and the acceleration in the front-rear direction of the vehicle are measured; the front-rear wheel ratio is calculated on the basis of the measured data of rotation speed; identification is made as to whether the calculated value of the front-rear wheel ratio lies within the judgement value range as shown in the table of Figure 9.

If the value is within the judgement value range, it follows that the tyre has not been replaced and remains that for summer use, but if it is not within the judgement value range, then it is identified that the tyre was changed to the other one (e.g. the tyre for winter use).

Figure 10 shows the threshold value determined on the basis of Figure 6.

The identification is carried out during running according to the following steps: the rotational speed of four tyres fitted to the wheels of a vehicle and the front and rear direction acceleration of vehicle are measured; the front-rear wheel ratio is calculated on the basis of the measured data of rotational speed; identification is made as to on which side, upper or lower side of the graph of threshold value shown in Figure 10 the calculated front-rear wheel ratio value lies.

Fore example, when the calculated front-rear ratio value is above the threshold value in the range higher than 0, it is judged to be the tyre for winter use, while when it is below the threshold value, it is judged to be the tyre for summer use. As the means for sensing the front-rear direction speed of the vehicle, there can be used a G sensor such as a piezo-electric type or a strain gauge type acceleration converter (sensor) fitted to the vehicle, or a wheel speed sensor for detecting the variation in time of vehicle speed.

If the embodiments using acceleration/deceleration sensing are used above, then running at high speed and the acceleration/deceleration frequency is small it may be that sensing is insufficient. Accordingly, it is possible to use two methods at the same time to improve the precision of judgement. In practice, detection might be made by either side. Alternatively, the system can be set only to signal when it is judged by both methods that the tyre has been changed.

As described above, the tyre identifying method and device of the present invention are based on the fact that the difference of the pattern stiffness of the tyre has an influence on the slip ratio, and thus it suffices that only the tyre rotation information is measured. It allows utilisation of the means for measuring the rotation of tyre such as already used by ABS which is equipped on the vehicle, thus requiring small initial cost. Furthermore, by automating the tuning by tyre, precision of vehicle control devices such as ABS or traction control can be elevated.

**Claims**

1. A tyre identifying method comprising the steps of:

   (a) measuring each rotational speed of the four tyres fitted to wheels of a vehicle;
   (b) calculating a ratio of front wheel rotational speed to rear wheel rotational speed from the measured values; characterised by
   (c) preparing a function of speed and front-rear wheel speed ratio on the basis of data previously measured using a known kind of tyre; and
   (d) identifying the kind of tyre fitted by comparing the calculated front-rear wheel ratio with the prepared function.

2. A tyre identifying method according to claim 1, characterised by identifying whether the fitted tyre is of the same kind as the tyre of the known kind or not by determining a prescribed judgement value range based on the function of speed and front-rear wheel ratio and by judging whether the calculated value of the front-rear wheel ratio lies within the judgement value range or not.

3. A tyre identifying method according to claim 1, characterised in that in the case where the tyres whose kind is known are two tyres of different stiffness, setting a threshold value between the two functions of speed and front-rear wheel ratio prepared from data for the two tyres, and identifying which of the two kinds of tyres by determining on which side of the threshold value the front-rear wheel ratio value lies.

4. A tyre identifying method according to claim 1, characterised by measuring the front-rear direction acceleration of the vehicle; calculating a ratio of front wheel rotation speed to rear wheel rotation speed from the measured value; and identifying the kind of tyre fitted by comparing the calculated front-rear ratio with a function of acceleration and front-rear wheel ratio prepared on the basis of data of front-rear ratio by the predetermined acceleration sequentially from a tyre whose kind is previously known.

5. A tyre identifying method according to claim 4, characterised by identifying whether the fitted tyre is of the same kind as the tyre of the known kind or not by determining the prescribed judgement value range based on the above function of acceleration and front-rear ratio wheel ratio and by judging whether the calculated amount of the front-rear wheel ratio lies within the judgement value range or not.

6. A tyre identifying method according to claim 4, characterised by in the case where the tyres whose kind is known are of the two tyres of different stiffness, setting a threshold value between the two functions of acceleration and front-rear wheel ratio prepared from data of the two tyres, and identifying to which kind of the two kinds of tyres having different stiffness the fitted tyre belongs, depending on which side of the threshold value the front-rear wheel ratio value lies.

7. A tyre identifying device comprising:

   (a) rotational speed measuring means measuring the rotation speed of each of four tyres fitted to the wheels of a vehicle;
   (b) means calculating a ratio of front wheel rotation speed to rear wheel rotation speed using the measured rotation speeds, characterised by
   (c) means preparing a function of speed and front-rear wheel speed ratio on the basis of data previously measured using a known kind of tyre; and
   (d) means identifying the kind of tyre fitted to the wheels of the vehicle by comparing the calculated ratio with the prepared function.

8. A tyre identifying device according to claim 7, characterised in that the device is so designed to identify whether the fitted tyre is of the same kind as the tyre of the known kind or not by determining the prescribed judgement value range based on the function speed and front-rear wheel ratio, and by judging whether the calculated amount of the front-rear wheel ratio lies within the judgement value range or not.

9. A tyre identifying device according to claim 7, characterised in that the device is so designed, in the case where the tyres whose kind is known are of the two tyres of different stiffness, to set a threshold value between the two functions of speed and front-rear wheel ratio prepared from data of the two tyres, and to identify to which kind of the two kinds of tyres having different stiffness the fitted tyre belongs, depending on which side of the threshold value the front-rear wheel ratio value lies.

10. A tyre identifying device according to claim 7, characterised by acceleration measuring means for measuring front-rear direction acceleration of the vehicle; and calculating and identifying means for identifying the kind of tyre fitted by comparing the calculated front-rear wheel ratio with a function of acceleration and front-rear wheel ratio prepared on the basis of data from a. tyre whose kind is previously known.

11. A tyre identifying device according to claim 10, characterised in that the device is so designed to identify whether the fitted tyre is of the same kind as the tyre of the known kind or not by determining the prescribed judgement value range based on the function of acceleration and front-rear wheel ratio function, and by judging whether the calculated value of the front-rear wheel ratio lies within the judgement range or not.

12. A tyre identifying device according to claim 10, characterised in that the device is so designed, in the case where the tyres whose kind is known are two tyres of different stiffness, to set a threshold value between the two functions of acceleration and front-rear wheel ratio prepared from data of the two tyres, and to identify to which kind of the two kinds of tyres having different stiffness the fitted tyre belongs, depending on which side of the threshold value the front-rear wheel ratio value lies.

**Patentansprüche**

1. Reifen-Identifizierungsverfahren mit den Schritten:

    (a) Messen jeder Drehgeschwindigkeit der vier auf die Räder eines Fahrzeugs aufgezogenen Reifen;
    (b) Berechnen eines Verhältnisses der Vorderrad-Drehgeschwindigkeit zur Hinterrad-Drehgeschwindigkeit aus den gemessenen Werten;
    dadurch gekennzeichnet, dass
    (c) eine Funktion von Geschwindigkeit und Vorderrad/Hinterrad-Drehgeschwindigkeitsverhältnis aufgrund von vorher mit Benutzung einer bekannten Reifenart gemessenen Werten abgeleitet wird; und
    (d) die Art des aufgezogenen Reifens durch Vergleichen des berechneten Vorderrad / Hinterrad-Drehgeschwindigkeitsverhältnisses mit der abgeleiteten Funktion identifiziert wird.

2. Reifen-Identifizierungsverfahren nach Anspruch 1, dadurch gekennzeichnet, dass identifiziert wird, ob der aufgezogene Reifen von gleicher Art wie der Reifen der bekannten Art ist oder nicht, indem ein vorgeschriebener Beurteilungs-Wertebereich aufgrund der Funktion von Geschwindigkeit und Vorderrad/Hinterrad-Verhältnis bestimmt und beurteilt wird, ob der berechnete Wert des Vorderrad/Hinterrad-Verhältnisses innerhalb des Beurteilungs-Wertebereiches liegt oder nicht.

3. Reifen-Identifizierungsverfahren nach Anspruch 1, dadurch gekennzeichnet, dass in dem Falle, dass die Reifen, deren Art bekannt ist, zwei Reifen von unterschiedlicher Steifigkeit sind, ein Schwellenwert zwischen den beiden aus Daten für die beiden Reifen abgeleiteten Funktionen der Geschwindigkeit und des Vorderrad/Hinterrad-Verhältnisses festgesetzt wird, und identifiziert wird, um welche der beiden Arten von Reifen es sich handelt, indem bestimmt wird, an welcher Seite des Schwellenwerts der Vorderrad/Hinterrad-Verhältniswert liegt.

4. Reifen-Identifizierungsverfahren nach Anspruch 1, dadurch gekennzeichnet, dass die Vorderrad/Hinterrad-Richtungs-Beschleunigung des Fahrzeugs gemessen wird; ein Verhältniswert von Vorderrad-Drehgeschwindigkeit zu Hinterrad-Drehgeschwindigkeit aus dem gemessenen Wert berechnet wird; und die Art des aufgezogenen Reifens identifiziert wird, durch Vergleichen des berechneten Vorderrad/Hinterrad-Verhältnisses mit einer Funktion der Beschleunigung und des Vorderrad/Hinterrad-Verhältnisses, die aufgrund der Daten des Vorderrad/Hinterrad-Verhältnisses durch die aufeinanderfolgende vorgegebene Beschleunigung eines Reifens abgeleitet wurde, dessen Art vorher bekannt ist.

5. Reifen-Identifizierungsverfahren nach Anspruch 4, dadurch gekennzeichnet, dass identifiziert wird, ob der aufgezogene Reifen von der gleichen Art wie der Reifen der bekannten Art ist oder nicht, indem der vorgeschriebene Beurteilungs-Wertebereich aufgrund der genannten Funktion von Beschleunigung und Vorderrad/Hinterrad-Verhältnis-Radverhältnis bestimmt und beurteilt wird, ob der berechnete Wert des Vorderrad/Hinterrad-Verhältnisses innerhalb des Beurteilungs-Wertebereiches liegt oder nicht.

6. Reifen-Identifizierungsverfahren nach Anspruch 4, dadurch gekennzeichnet, dass in dem Fall, wo die Reifen, deren Art bekannt ist, zwei Reifen unterschiedlicher Steifigkeit sind, ein Schwellenwert zwischen den beiden aus den Daten der beiden Reifen abgeleiteten Funktionen von Beschleunigung und Vorderrad/Hinterrad-Verhältnis festgesetzt wird, und in Abhängigkeit davon, an welcher Seite des Schwellenwerts der Vorderrad/Hinterrad-Verhältniswert liegt, identifiziert wird, zu welcher Art der beiden Reifenarten mit unterschiedlicher Steifigkeit der aufgezogene Reifen gehört.

7. Reifen-Identifizierungsvorrichtung, welche umfasst:

(a) Drehgeschwindigkeits-Messmittel, welches die Drehgeschwindigkeit jedes der auf die Räder eines Fahrzeugs aufgezogenen Reifen misst;
(b) Mittel, welches mit Benutzen der gemessenen Drehgeschwindigkeiten ein Verhältnis von Vorderrad-Drehgeschwindigkeit zu Hinterrad-Drehgeschwindigkeit berechnet,
gekennzeichnet durch
(c) Mittel, welches aufgrund der vorher mit Benutzung einer bekannten Reifenart gemessenen Daten eine Funktion der Geschwindigkeit und des Vorderrad/Hinterrad-Geschwindigkeitsverhältnisses herstellt; und
(d) Mittel, welches durch Vergleichen des berechneten Verhältnisses mit der abgeleiteten Funktion die Art des auf die Räder des Fahrzeugs aufgezogenen Reifens identifiziert.

8. Reifen-Identifizierungsvorrichtung nach Anspruch 7, dadurch gekennzeichnet, dass die Vorrichtung so ausgelegt ist, dass sie identifiziert, ob der aufgezogene Reifen von der gleichen Art wie der Reifen der bekannten Art ist oder nicht, indem sie den vorgeschriebenen Beurteilungs-Wertebereich aufgrund der Funktion von Geschwindigkeit und Vorderrad/Hinterrad-Verhältnis bestimmt und beurteilt, ob der berechnete Wert des Vorderrad/Hinterrad-Verhältnisses innerhalb des Beurteilungs-Wertebereiches liegt oder nicht.

9. Reifen-Identifizierungsvorrichtung gemäß Anspruch 7, dadurch gekennzeichnet, dass die Vorrichtung so ausgelegt ist, dass in dem Falle, wo die Reifen, deren Art bekannt ist, zwei Reifen unterschiedlicher Steifigkeit sind, ein Schwellenwert zwischen die beiden aus den Daten der beiden Reifen abgeleiteten Funktionen von Geschwindigkeit und Vorderrad/Hinterrad-Verhältnis gesetzt wird, und in Abhängigkeit davon, an welcher Seite des Schwellenwerts der Vorderrad/ Hinterrad-Verhältniswert liegt, identifiziert wird, zu welcher Art der beiden Arten von Reifen unterschiedlicher Steifigkeit der aufgezogene Reifen gehört.

10. Reifen-Identifizierungsvorrichtung nach Anspruch 7, gekennzeichnet durch Beschleunigungs-Messmittel zum Messen der Vorderrad/Hinterrad-Richtungsbeschleunigung des Fahrzeugs; und Berechnungs- und Identifizierungsmittel zum Identifizieren der Art des aufgezogenen Reifens durch Vergleichen des berechneten Vorderrad/Hinterrad-Verhältnisses mit einer aufgrund von Daten eines Reifens, dessen Art vorher bekannt ist, abgeleiteten Funktion von Beschleunigung und Vorderrad/Hinterrad-Verhältnis.

11. Reifen-Identifizierungsvorrichtung nach Anspruch 10, dadurch gekennzeichnet, dass die Vorrichtung so ausgelegt ist, dass sie identifiziert, ob der aufgezogene Reifen von der gleichen Art wie der Reifen der bekannten Art ist oder nicht, durch Bestimmen des vorgeschriebenen Beurteilungs-Wertebereiches aufgrund der Funktion von Beschleunigung und Vorderrad/Hinterrad-Verhältnisfunktion, und durch Beurteilen, ob der berechnete Wert des Vorderrad/ Hinterrad-Verhältnisses innerhalb des Beurteilungs-Wertebereiches liegt oder nicht.

12. Reifen-Identifizierungsvorrichtung nach Anspruch 10, dadurch gekennzeichnet, dass die Vorrichtung so ausgelegt ist, dass in dem Fall, wo die Reifen, deren Art bekannt ist, zwei Reifen unterschiedlicher Steifigkeit sind, ein Schwellenwert zwischen den beiden aus Daten der beiden Reifen abgeleiteten Funktionen aus Beschleunigung und Vorderrad/Hinterrad-Verhältnis festgesetzt wird, und in Abhängigkeit davon, an welcher Seite des Schwellenwerts der Vorderrad/Hinterrad-Verhältniswert liegt, identifiziert wird, zu welcher Art der beiden Reifenarten mit unterschiedlicher Steifigkeit der aufgezogene Reifen gehört.

**Revendications**

1. Procédé d'identification d'un pneumatique, comprenant les étapes suivantes :

   (a) la mesure de la vitesse de rotation de chacun de quatre pneumatiques montés sur les roues d'un véhicule,
   (b) le calcul du rapport de la vitesse de rotation des roues avant et de la vitesse de rotation des roues arrière à partir des valeurs mesurées, caractérisé par :
   (c) la préparation d'une fonction de la vitesse et du rapport des vitesses des roues avant et arrière en fonction de données mesurées auparavant pour un type connu de pneumatique, et
   (d) l'identification de la nature d'un pneumatique monté par comparaison du rapport calculé des roues avant et arrière à la fonction préparée.

2. Procédé d'identification de pneumatique selon la revendication 1, caractérisé par l'identification par détermination du fait que le pneumatique monté est du même type ou non que le pneumatique de type connu par détermination d'une plage prescrite de valeurs de décision qui dépend de la fonction de la vitesse et du rapport des vitesses des roues avant et arrière et par détermination du fait que la valeur calculée du rapport des vitesses des roues avant et arrière se trouve dans la plage de valeurs de décision ou non.

3. Procédé d'identification de pneumatique selon la revendication 1, caractérisé en ce que, dans le cas où des pneumatiques dont le type est connu sont deux pneumatiques de rigidités différentes, le procédé comprend le réglage d'une valeur de seuil entre les deux fonctions de vitesse et de rapport des roues avant et arrière préparées d'après des données relatives aux deux pneumatiques, et l'identification de l'un des deux types de pneumatique par détermination du côté auquel se trouve la valeur du rapport des roues avant-arrière par rapport à la valeur de seuil.

4. Procédé d'identification de pneumatique selon la revendication 1, caractérisé par la mesure de l'accélération dans la direction avant-arrière du véhicule, le calcul du rapport de la vitesse de rotation des roues avant et de la vitesse de rotation des roues arrière à partir de la valeur mesurée, et l'identification de la nature du pneumatique monté par comparaison du rapport des roues avant-arrière calculé à une fonction d'accélération et du rapport des roues avant-arrière préparé d'après les données relatives au rapport des roues avant-arrière pour l'accélération prédéterminée, séquentiellement, pour un pneumatique dont la nature est connue auparavant.

5. Procédé d'identification de pneumatique selon la revendication 4, caractérisé par l'identification du fait que le pneumatique monté est du même type ou non que le pneumatique de type connu par détermination de la plage prescrite de valeurs de décision d'après la fonction précitée d'accélération et du rapport des roues avant-arrière et par détermination du fait que la quantité calculée du rapport des roues avant-arrière se trouve dans la plage de valeurs de décision ou non.

6. Procédé d'identification de pneumatique selon la revendication 4, caractérisé en ce que, dans le cas où des pneumatiques dont la nature est connue sont deux pneumatiques de rigidités différentes, il comprend le réglage d'une valeur de seuil comprise entre les deux fonctions de l'accélération et du rapport des roues avant-arrière préparé à partir des données des deux pneumatiques, et l'identification d'un des deux types de pneumatique qui ont des rigidités différentes auquel appartient le pneumatique monté, d'après le côté de la valeur de seuil auquel se trouve la valeur du rapport des roues avant-arrière.

7. Appareil d'identification de pneumatique, comprenant :

   (a) un dispositif de mesure de vitesse de rotation destiné à mesurer la vitesse de rotation de chacun des quatre pneumatiques montés sur les roues d'un véhicule, et
   (b) un dispositif de calcul du rapport de la vitesse de rotation des roues avant et de la vitesse de rotation des roues arrière à l'aide des vitesses mesurées de rotation, caractérisé par :
   (c) un dispositif de préparation d'une fonction de la vitesse et du rapport des vitesses des roues avant-arrière d'après des données mesurées auparavant à l'aide d'un type connu de pneumatique, et
   (d) un dispositif d'identification de la nature du pneumatique monté sur les roues du véhicule par comparaison du rapport calculé à la fonction préparée.

8. Appareil d'identification de pneumatique selon la revendication 7, caractérisé en ce que l'appareil est réalisé de manière qu'il identifie le fait que le pneumatique monté est du même type ou non que le pneumatique de type connu par détermination de la plage prescrite de valeurs de décision d'après la fonction de vitesse et du rapport des roues avant-arrière, et par détermination du fait que la quantité calculée du rapport de vitesse des roues avant-arrière se trouve dans la plage de valeurs de décision ou non.

9. Appareil d'identification de pneumatique selon la revendication 7, caractérisé en ce que l'appareil est réalisé afin que, dans le cas où des pneumatiques dont le type est connu sont deux pneumatiques de rigidités différentes, une valeur de seuil est réglée entre les deux fonctions de vitesse et du rapport des roues avant-arrière préparées à partir des données de pneumatique, et le type parmi les deux types de pneumatique de rigidités différentes auquel appartient le pneumatique monté est identifié d'après le côté de la valeur de seuil auquel se trouve la valeur du rapport des vitesses des roues avant-arrière.

10. Appareil d'identification de pneumatique selon la revendication 7, caractérisé par un dispositif de mesure d'accélération destiné à mesurer l'accélération dans la direction avant-arrière du véhicule, et un dispositif de calcul et d'identification destiné à identifier le type de pneumatique monté par comparaison du rapport calculé des roues avant-arrière à une fonction de l'accélération et du rapport des roues avant-arrière préparée d'après les données d'un pneumatique dont le type est connu au préalable.

11. Appareil d'identification de pneumatique selon la revendication 10, caractérisé en ce que l'appareil est réalisé afin qu'il identifie le fait que le pneumatique monté est du même type ou non que le pneumatique de type connu par détermination de la plage prescrite de valeurs de décision d'après la fonction de l'accélération et la fonction du rapport des roues avant-arrière, et par détermination du fait que la valeur calculée du rapport des roues avant-arrière est ou non dans la plage de valeurs de décision.

12. Appareil d'identification de pneumatique selon la revendication 10, caractérisé en ce que l'appareil est réalisé afin que, dans le cas où des pneumatiques dont le type connu sont deux pneumatiques de rigidités différentes, une valeur de seuil est réglée entre les deux fonctions d'accélération et du rapport des roues avant-arrière préparées à partir de données des deux pneumatiques, et le type, parmi les deux types de pneumatique de rigidités différentes, auquel appartient le pneumatique monté est identifié d'après le côté de la valeur de seuil auquel se trouve la valeur du rapport des roues avant-arrière.

# FIG. 1

TIRE FOR SUMMER USE

AT DRIVING
($\mu$)

SLIP RATIO (%)

AT BRAKING

# FIG. 2

TIRE FOR WINTER USE

AT DRIVING ($\mu$)

SLIP RATIO (%)

AT BRAKING

FIG. 3

FIG. 4

FF VEHICLE

TIRE FOR SUMMER USE

EP 0 783 983 B1

# FIG. 5

FF VEHICLE

TIRE FOR WINTER USE

FRONT-REAR WHEEL RATIO

## FIG. 6

FF VEHICLE

FRONT-REAR WHEEL RATIO

TIRE FOR
WINTER USE

TIRE FOR
SUMMER USE

1.02

0.98

−0.4

0.4

ACCELERATION (G)

EP 0 783 983 B1

# FIG. 7

FRONT-REAR WHEEL
RATIO×100

VEHICLE SPEED (km/h)

EP 0 783 983 B1

# FIG. 8

FRONT-REAR WHEEL
RATIO×100

▲ TIRE FOR WINTER USE
* TIRE FOR SUMMER USE

THRESHOLD

VEHICLE SPEED (km/h)

# FIG. 9

FF VEHICLE

FRONT-REAR WHEEL RATIO

1.02

JUDGEMENT VALUE RANGE

TIRE FOR
SUMMER USE

-0.4

0.4

ACCELERATION (G)

0.98

EP 0 783 983 B1

## FIG.10

FF VEHICLE

FRONT-REAR WHEEL RATIO

TIRE FOR
WINTER USE

THRESHOLD

TIRE FOR
SUMMER USE

1.02

-0.4

0.4

ACCELERATION (G)

0.98

EP 0 783 983 B1